# EUROPEAN PATENT SPECIFICATION

(11) **EP 1 739 997 B1**
(45) Date of publication and mention of the grant of the patent: **16.03.2011**
(21) Application number: 05014046.6
(22) Date of filing: 29.06.2005
(51) Int. Cl.: H04W 24/00

(54) **A device for quality testing using different types of mobile phones**
Gerät zur Qualitätsüberprüfung von verschiedenen Mobiltelefontypen
Appareil pour tester la qualité de différents types de téléphones mobiles

(43) Date of publication of application: 03.01.2007
(73) Proprietor: SwissQual License AG, 4528 Zuchwil (CH)
(72) Inventor: Bobst, Hanspeter, 4702 Oensingen (CH)
(74) Representative: Sutter, Kurt

(56) References cited:
- US-A- 5 875 397
- US-A1- 2004 106 400

## Description

The invention relates to a device for quality testing using different types of mobile phones.

To characterize the quality and performance of a mobile phone network, a mobile phone is conventionally placed in a suitable test device and brought into different locations within the network. At each location, the quality of communication is tested and logged. Similar test devices can also be used to test the quality of a mobile phone.

The problem to be solved by the present invention is to provide a device of this type that can be used for a variety of different types of phones.

This problem is solved by the device according to the independent claim.

Hence, the mobile phone comprises a control unit for controlling and monitoring operation of the test phone and an interface module. The interface module is separate from the control unit and comprises a parameter memory for storing at least one parameter indicative of the properties of a given type of test phone and an interface circuit for connecting the control unit to the given type of test phone. The control unit is adapted to retrieve the phone specific parameters from the parameter memory and to electrically connect the test phone through the interface circuit. This design allows to quickly adapt the device to a new type of phone by simply replacing the interface module.

A similar device, but with integrated control unit and interface module, is known from US 5,875,397.

Further advantageous embodiments and applications of the invention are disclosed in the dependent claims as well as in the following description, which makes reference to the annexed figures, wherein:
Fig. 1 is a three dimensional view of an embodiment of the device with one side wall removed,
Fig. 2 is a three dimensional sectional view in a vertical plane along line II-II of Fig. 1,
Fig. 3 is a two dimensional sectional view along line II-II of Fig. 1,
Fig. 4 is the device of Fig. 3 modified to receive a phone with hinged display,
Fig. 5 is an algorithm for no-reference video quality assessment, and
Fig. 6 a block circuit diagram of the device, illustrating the interface module.

### General design

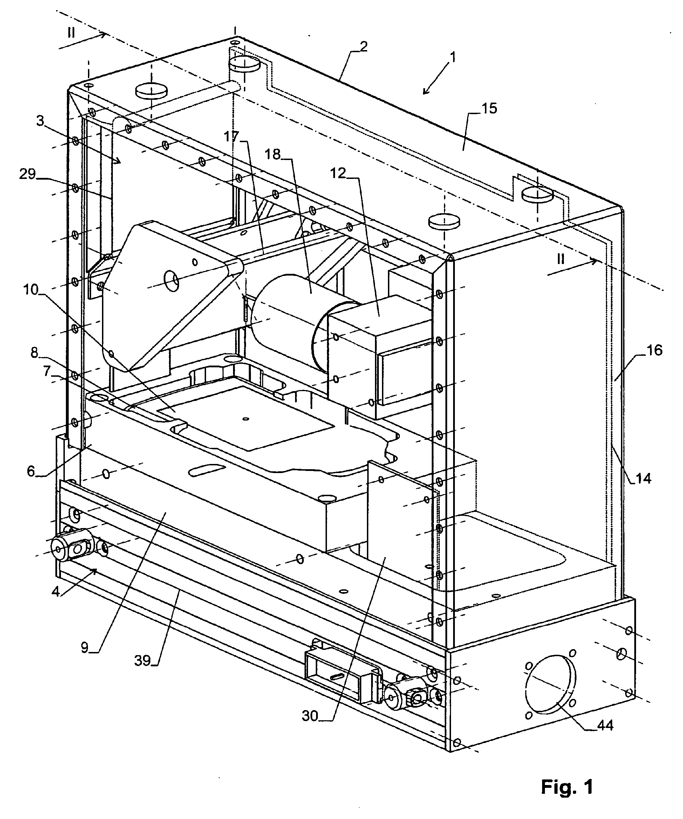

Figs. 1 - 3 show a device 1 for testing mobile phones and their reception in a mobile phone network. The device comprises a housing 2 divided into an upper housing section 3 and a lower housing section 4.

A phone holder 6 is arranged in upper housing section 3. In the present embodiment, it is formed by a frame-like structure surrounding a central opening or recess 7 shaped to receive a phone 8 in a well defined position and orientation. Phone holder 6 is a modular part that can be replaced easily. Differently shaped phone holders 6 can be provided for different types and brands of phones. Phone holder 6 is mounted on a frame structure 9 in the bottom part of upper housing section 3.

The mobile phone 8 shown in Fig. 1 is a device with an integrated display 10. It is placed in phone holder 6 in such a way that display 10 is facing upwards.

To monitor the quality of an image or video on display 10, a camera 12 can be arranged in upper housing section 3. Camera 12 is mounted to a mount formed by two vertical plates 14 resting on frame structure 9, one of which is indicated in dashed lines in Fig. 1, with the other being parallel thereto arranged at the opposite side of the device. At their upper ends, the vertical plates 14 are connected to a top wall plate 15 of upper housing section 3, which in turn is connected to four vertical wall plates 16, thereby forming a rigid structure for keeping the relative position between camera 12 and display 10 fixed even when the device is exposed to movements, e.g. while it is being driven or walked through a mobile phone network.

Imaging optics comprising a mirror 17 and a camera objective 18 project the light from display 10 onto the photo-sensitive array of camera 12, which allows to view the image or video data displayed on display 10 by means of the camera.

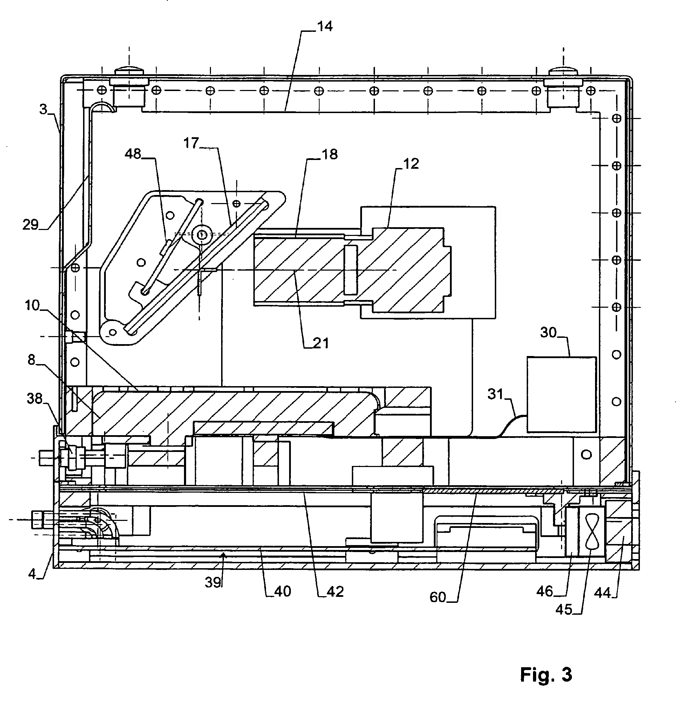

As can best be seen in Fig. 3, mirror 17 is arranged under an angle of approximately 45°, such as between 30° and 60°, in respect to the surface of display 10. It reflects the light coming from display 10 into the direction of the axis 21 of camera 12. Camera axis 21 is substantially parallel to the surface of display 10 and to the longitudinal axis of mobile phone 8.

Mirror 17 folds the projection path of the imaging optics, thereby allowing to create a more compact device that takes less space and is mechanically more stable.

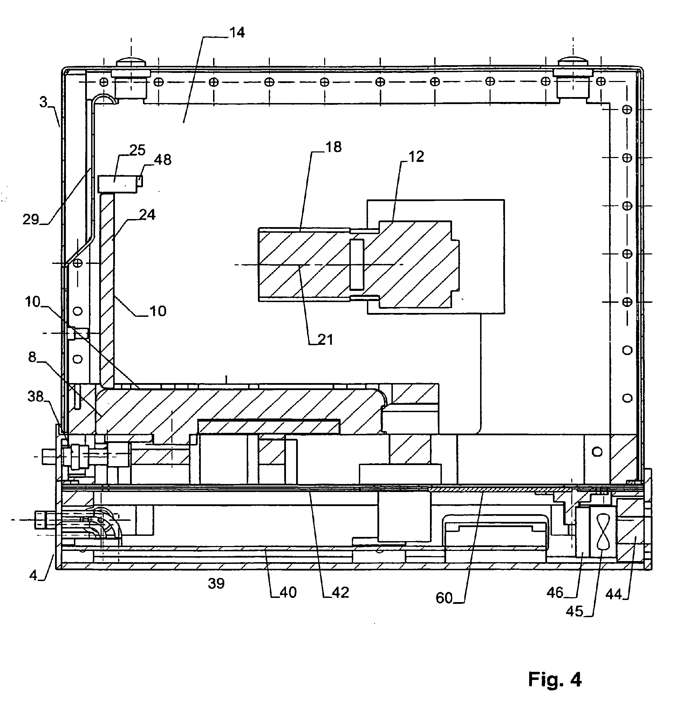

A second advantage of using a design with folded projection path is the fact that, by removing mirror 17, it becomes possible to use the same basic design for testing a phone with hinged display, such as it is shown in Fig. 4. The device of Fig. 4 is being used for a phone the display 10 of which is in a separate display housing 24 pivotally attached to the body of phone 8. To allow camera 12 to view display 10 of the phone, display housing 24 is pivoted such that display 10 is substantially vertical and stands perpendicularly to camera axis 21. A retainer 25 e.g. mounted to vertical plate 14 is used to keep display housing 24 in its vertical position.

Turning now back to Figs. 1 - 3, it can be seen that there is a number of objects arranged in upper housing section 3, all of which can potentially reflect the diffuse light coming from display 10. To avoid undesired noise from such reflected light in the signal of camera 12, all components within upper housing sections 3 with the exception of the imaging optics 17, 18 and the mobile phone 8 should have black, non-reflecting surfaces. This is in particular true for the walls 15, 16 and the vertical plates 14.

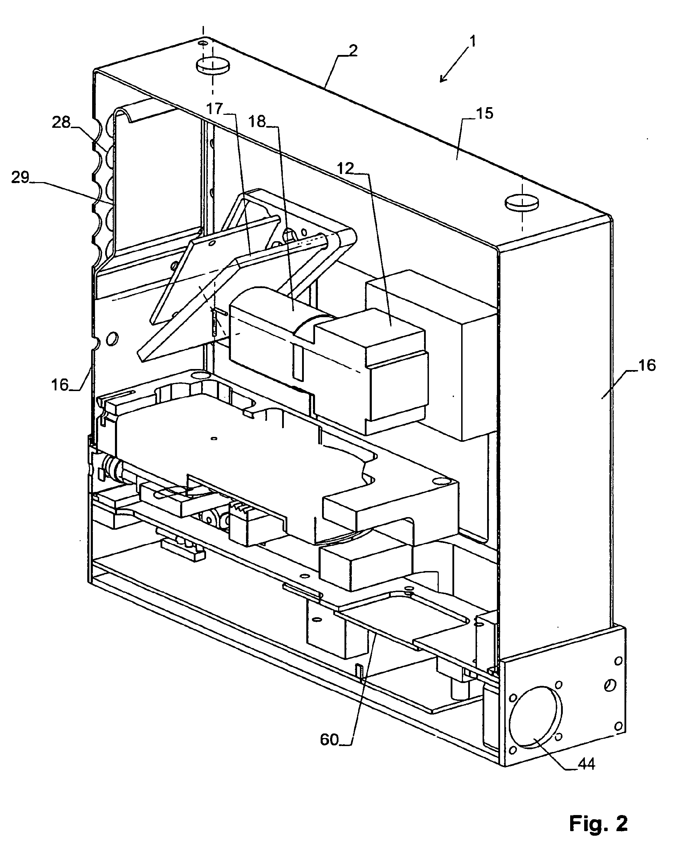

In addition, and as best can be seen in Fig. 2, upper housing section 3 has a number of ventilation openings 28 in one of the vertical walls 16. These ventilation openings carry off heat generated by the device 1 and the phone 8. To prevent light entering ventilation openings 28 from reaching camera 12, at least one light baffle plate 29 is arranged in front of the openings 28 for forming a labyrinth preventing light from entering upper housing section 3. Baffle plate 29 is non-transparent plastic or metal plate. To further improve the light retention properties of the labyrinth, several baffle plates can be arranged behind each other, forming a meandering path for passage of the ventilation air between them.

When using device 1, it may frequently be necessary to change some characteristics on the SIM card of phone 8, e.g. for switching between different network providers. To simplify this process, a SIM card holder 30 externally to phone 8 is arranged in upper housing section 3. A connector 31, as shown in Fig. 3, is provided to connect SIM card holder 30 to a dummy SIM card placed in the SIM card bay of phone 8, thereby connecting a SIM in SIM card holder 30 to phone 8. This makes it possible to replace the SIM card without removing phone 8 from phone holder 6.

Upper housing section 3, and in particular the walls 15, 16 as well as the vertical plates 14, can be made of a plastic or metal. If they are of a conductive material, they may hinder radiowave communication between phone 8 and a mobile phone network.

To ensure proper communication between phone 8 and the network, upper housing section 3 is therefore, in one embodiment, at least partially of plastics for allowing radiowave communication between phone 8 in holder 6 and the mobile phone network. In particular, the walls 15, 16 as well as the vertical plates 14 are, in that case, advantageously made from a sturdy plastic material.

Alternatively, and as shown in particular in Fig. 3, a lead-through 38 may be provided for connecting phone 8 in phone holder 6 to an external antenna.

The signals from camera 12 must be processed by suitable control unit. Its circuitry is preferably integrated, at least in part, in device 1.

In the embodiment of Figs. 1 - 3, most parts of the control unit 39 are located on a PCB in lower housing section 4. In an advantageous embodiment, the control unit 39 forms an image processing computer for evaluating the quality of the image or video from camera 12 connected to it.

Control unit 39 further comprises electronic components and software for controlling and monitoring the operation of phone 8. In particular, it is connected to a digital interface of the phone, which allows the control unit issue commands to the phone and to receive status information therefrom. It may also contain an interface to an audio output of phone 8.

To prevent RF noise generated by control unit 39 from interfering with the operation of phone 8, an RF shielding 42 is arranged between the two housing sections 3, 4, separating phone holder 8 from control unit 39. (In this context, "RF noise" designates any electromagnetic noise in a frequency range above 1 MHz and in particular in the frequency range of communication that mobile phone networks are using.)

RF shielding 42 can e.g. consist of a metallic net or punctured plate, which has openings for the passage of electric cables and ventilation air.

An interface module 60, as shown in Figs. 2 and 3 is arranged at an opening 62 of RF shielding 42. It comprises a printed circuit board that is, on one side, covered by a grounded metal layer extending over the whole opening 62 sparing only some through-contacts, which allows to maintain the shielding also in the area of opening 62. The purpose and function of interface module 60 will be described below.

An air inlet opening 44 is arranged in lower housing section 4, connecting the same to the surroundings of device 1. A ventilator 45 and heater 46, as schematically indicated in Fig. 3, are arranged at air inlet opening 44 for drawing in air and, if necessary and as described below, for heating the same.

The air drawn in by ventilator 45 through heater 46, through lower housing section 4, where it carries off heat generated by control unit 39, and then enters upper housing section 3, where it carries off heat generated by phone 8 and camera 21. It then passes the gap above light baffle plate 29 and exits through the outlet openings 28.

To control the operation of the heater 46, a temperature sensor 48 is arranged in upper housing section 3. The temperature from temperature sensor 48 is monitored by control unit 39 and heater 46 is switched on if the temperature in upper housing section 3 is below a preferred operating temperature of phone 8, e.g. at 20 °C. The advantage of this is two-fold: One the one hand, phone 8 and in particular its display 10 may fail if temperatures are too low. On the other hand, heating the incoming air reduces its relative humidity, thereby reducing the risk of water condensation on display 10 of phone 8, on imaging optics 17, 18, and/or on camera 12.

The algorithms to be used in control unit 39 for analyzing the quality of the incoming image or video signal depend on if a "full reference", "reduced reference" or "no reference" analysis is to be carried out, i.e. if the original image or video (before it was transmitted over the network) is known fully, in part or not at all. Various such algorithms are known to the person skilled in the art and e.g. described in
- Z. Wang, A. C. Bovik, and B. L. Evans, "Blind measurement of blocking artifacts in images," in Proc. IEEE Int. Conf. Image Proc., vol. 3, Sept. 2000, pp. 981-984, or in
- H.R. Sheikh, Z. Wang, L.K. Cormack, and A.C. Bovik, "Blind Quality Assessment for JPEG2000 Compressed Images", Thirty-Sixth Annual Asilomar Conference on Signals, Systems, and Computers, Pacific Grove, California, November 3-6, 2002.

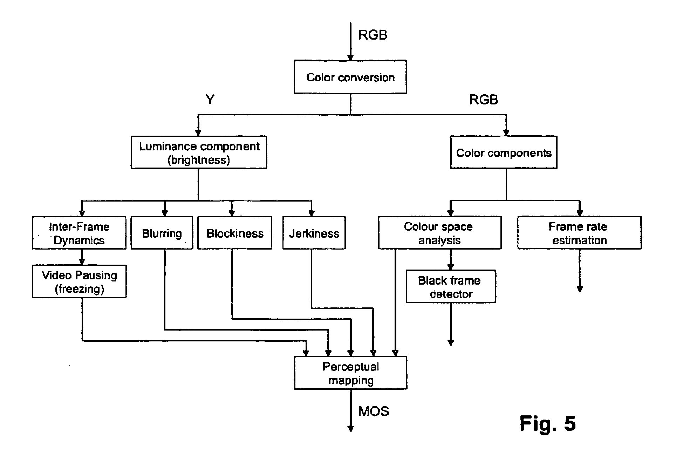

A specific example of an algorithm for a no-reference video quality assessment is shown in Fig. 5. It has the following processing steps:
- The input video signal is color converted to obtain a luminance signal Y and an RGB signal.
- The luminance Y and RGB signal are processed separately.
- Using the luminance Y signal, blurring, blockiness, jerkiness and inter frame (picture) dynamics are derived.
- The color signal allows to determine a parameter describing the colorfulness and to detect black frames.
- Perceptual mapping combines the results from the above analysis to a single quality number (MOS = Mean Opinion Score), which is a main result of the algorithm.

In order to avoid anti-aliasing problems, the resolution of camera 12 is advantageously sufficiently high such that each pixel of the projected part of display 10 is projected onto at least two horizontal and two vertical pixels of camera 12. This oversampling prevents data loss between display 10 and the signal of camera 12.

Similarly, data loss in time space can be avoided if the frame rate of the camera is at least equal to the frame rate of the display.

Depending on the section of display 10 that is projected onto camera 12, some parts of the recorded image may have to be filtered out before processing. For example, if the projected part of display 10 contains status information superimposing a video image, the areas containing the status information may have to be ignored. The regions of the image from camera 12 that are to be processed may therefore depend on the type of the phone 8 and can be derived from data stored in interface module 60 as described below.

Apart from assessing the quality of image or video data recorded by camera 12 from display 10, control unit 39 may also derive information indicative of an operational status of phone 8 from the signal from camera 12. For example, if phone 8 displays a typical error message on display 10 in case of malfunction, this error message can be detected by suitably processing the image recorded by camera 12. Similarly, a malfunctioning camera may exhibit typical display behavior, such as a complete freeze or blackout of the display, which again can be detected by suitably processing the signal from camera 12. Generally, the signal from the camera 12 can be processed to detect an operational status and in particular a malfunctioning of the phone. Depending on the detected operational status, suitable commands can then be issued to the phone or the phone can be reset.

In the embodiment above, control unit 39 is capable to fully process the signal from camera 12 and to create the relevant parameter's describing the quality of the image or video data. However, part of that functionality can also be delegated to an external computer.

In the embodiment above, control unit 39 has used the signal from camera 12 as one source of information for assessing the transmission quality. Alternatively, or in addition thereto, control unit 39 can also use the phone's audio signal, or a digital raw data signal obtained through the phone's digital interface.

### Interface module

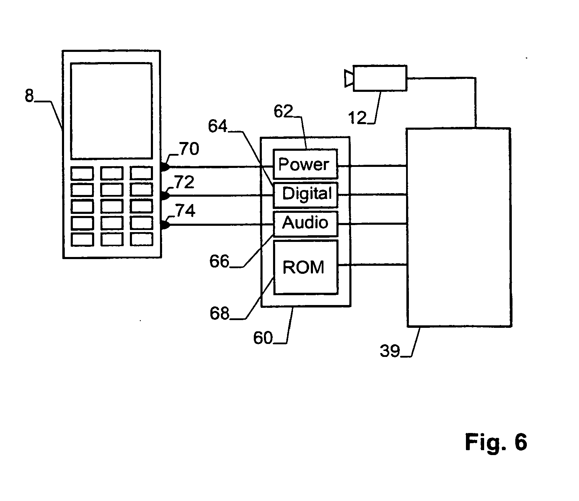

Fig. 6 shows a block circuit diagram illustrating how phone 8 is connected to control unit 39.

As can be seen, the interface module 60, which has been mentioned above in reference to Figs. 2 and 3, is arranged between control unit 39 and phone 8. It is separate from control unit 39, i.e. it is a separate mechanical part that can be removed without removing the control unit. Its purpose is to adapt the present device to the particular properties of the type of phone that is currently used.

Interface module 60 comprises an interface circuit including a power interface 62, a digital signal interface 64, and an audio signal interface 66. It also comprises a parameter memory 68. The parameter memory serves to store at least one parameter indicative of the properties of the currently used test phone, and the interface circuit serves to physically connect control unit 39 to the test phone.

Power interface 62 feeds the correct supply voltage(s) to phone 8. It e.g. contains at least one voltage regulator generating the correct voltage or voltages. Alternatively, it can generate a reference voltage or a digital voltage value that is then used by a power supply external to power interface 62 for generating the appropriate voltage(s) for phone 8. This voltage is fed from power interface 62 to a voltage supply input 70 of phone 8.

Digital signal interface 64 connects the digital interface 72 of phone 8 to the digital interface of control unit 39. In particular, it may shift the signals and adjust their voltage as required.

Audio signal interface 66 contains the circuitry to connect an audio output 74 of phone 8 to an audio input of control unit 39. In particular, it will adjust the impedance, level and reference potential of the phone's audio signal to those required by control unit 39.

Parameter memory 68 stores at least one parameter indicative of the properties of phone 8. Such properties can e.g. be:
- the manufacturer and type of the phone;
- the protocol to be used by control unit 39 when communicating with phone 8 via digital signal interface 64;
- the region of the part of the video signal from camera 12 that has to be processed for quality assessment;
- criteria to detect an operation failure of phone 8;
- a reset procedure for phone 8;
- etc.

These properties can be recorded in parameter memory 68 explicitly. Alternatively, some or all of them may be stored, together with the corresponding properties of other phone types, in a phone parameter table stored in control unit 39, and control unit 39 may simply obtain an identifier of the phone (e.g. the manufacturer and type of the phone or a unique ID) from parameter memory 68 and then retrieve the correct properties from the phone parameter table.

Hence, the test device of the present application can be adapted to different types of test phones by simply replacing interface unit 60 (and, if the phones have different shapes, by replacing phone holder 6).

The parameter memory 68 as well as the interface circuit (i.e. power interface 62, digital signal interface 64, and audio signal interface 66) are all mounted to a common circuit board. Interface module 60 can be removed from the test device separate from control unit 39.

Advantageously, and as shown in Figs. 2 and 3, the device is designed such that interface module 60 and phone holder 6 form a common phone adapter unit, in the present embodiment together with the plate forming RF shielding 42. This phone adapter unit, which represents not only the electrical and logical, but also most of the mechanical parameters of phone 8, can then be replaced as a whole.

## Claims

1. A device for assessing the quality of a mobile phone and/or mobile phone network comprising a control unit (39) for controlling and monitoring operation of a test phone and an interface module (60), said interface module (60) comprising
a parameter memory (68) for storing at least one parameter indicative of the properties of a given type of test phone, and
an interface circuit (62, 64, 66) for connecting said control unit (39) to said given type of test phone,
wherein said control unit (39) is adapted to retrieve said phone specific parameters from said parameter memory (68) and to electrically connect to said test phone through said interface circuit (62, 64, 66),
**characterized in that** said interface module (60) is replaceable allowing to quickly adapt the device to a new type of phone without replacing said control unit (39).

2. The device of claim 1 wherein said parameter memory (68) and said interface circuit (62, 64, 66) are arranged on a common circuit board.

3. The device of any of the preceding claims wherein said parameter memory (68) comprises information indicative of a protocol to be used by said control unit (39) for communicating with said phone.

4. The device of any of the preceding claims further comprising a camera (12) for recording an image of a display (10) of said phone, wherein said parameter memory (68) comprises information indicative of a region of said image to be processed for assessing said quality.

5. The device of any of the preceding claims wherein said interface circuit (62, 64, 66) comprises an audio signal interface (66) for connecting an audio output of said phone to an audio input of said control unit (39).

6. The device of any of the preceding claims wherein said interface circuit (62, 64, 66) comprises a power interface (62) for feeding a supply voltage to said phone (8).

7. The device of any of the preceding claims wherein said interface circuit (62, 64, 66) comprises a digital signal interface (64) for connecting a digital interface of said phone to said control unit (39).

8. The device of any of the preceding claims wherein said control unit (39) can connect to different types of test phones by replacing said interface module (60).

9. The device of any of the preceding claim wherein said interface module (60) is separate from said control unit (39).

10. The device of any of the preceding claims further comprising a phone holder (6) for receiving said phone, wherein said phone holder (6) and said interface unit (60) are part of a phone adapter unit (6, 42, 60), which is replaceable without replacing said control unit (39).

11. The device of claim 10 wherein said phone adapter unit (6, 42, 60) further comprises a conducting plate forming an RF shielding (42) between said control unit (39) and said phone (8).

## Patentansprüche

1. Ein Gerät zur Beurteilung der Qualität eines Mobiltelefons und/oder eines Mobiltelefonnetzwerks umfassend eine Steuereinheit (39) zum Steuerung und Überwachen des Betriebs eines Testtelefons und ein Schnittstellenmodul (60), wobei das genannte Schnittstellenmodul (60) umfasst:
einen Parameterspeicher (68) zum Speichern zumindest eines Parameters, der indikativ für die Eigenschaften eines vorgegebenen Typs eines Testtelefons ist, und
einen Schnittstellenschaltkreis (62, 64, 66) zum Verbinden der genannten Steuereinheit (39) mit dem genannten vorgegebenen Typ eines Testtelefons,
wobei die genannte Steuereinheit (39) ausgestaltet ist, um die genannten telefonspezifischen Parameter aus dem genannten Parameterspeicher (68) abzurufen und um sich elektrisch über den genannten Schnittstellenschaltkreis (62, 64, 66) mit dem genannten Testtelefon zu verbinden,
**dadurch gekennzeichnet, dass** das genannte Schnittstellenmodul (60) austauschbar ist, sodass ein schnelles Adaptieren des Geräts an einen neuen Typ von Telefon erlaubt ist, ohne die genannte Steuereinheit (39) auszutauschen.

2. Das Gerät nach Anspruch 1, wobei der genannte Parameterspeicher (68) und der genannte Schnittstellenschaltkreis (62, 64, 66) auf einer gemeinsamen Platine angeordnet sind.

3. Das Gerät nach einem der vorhergehenden Ansprüche, wobei der genannte Parameterspeicher (68) Information umfasst, die indikativ für ein Protokoll ist, welches von der genannten Steuereinheit (39) verwendet werden soll, um mit dem genannten Telefon zu kommunizieren.

4. Das Gerät nach einem der vorhergehenden Ansprüche weiter umfassend eine Kamera (12) zum Erfassen eines Abbildes einer Anzeige (10) des genannten Telefons, wobei der genannte Parameterspeicher (68) Information umfasst, die indikativ für einen Bereich des genannten Abbildes ist, der zum Beurteilen der genannten Qualität verarbeitet werden soll.

5. Das Gerät nach einem der vorhergehenden Ansprüche, wobei der genannte Schnittstellenschaltkreis (62, 64, 66) eine Tonsignalschnittstelle (66) zum Verbinden eines Audio-Ausgangs des genannten Telefons mit einem Audio-Eingang der genannten Steuereinheit (39) umfasst.

6. Das Gerät nach einem der vorhergehenden Ansprüche, wobei der genannte Schnittstellenschaltkreis (62, 64, 66) eine Leistungsschnittstelle (62) zum Einspeisen einer Vorsorgungsspannung in das genannte Telefon (8) umfasst.

7. Das Gerät nach einem der vorhergehenden Ansprüche, wobei der genannte Schnittstellenschaltkreis (62, 64, 66) eine digitale Signalschnittstelle (64) zum Verbinden einer digitalen Schnittstelle des genannten Telefons mit der genannten Steuereinheit (39) umfasst.

8. Das Gerät nach einem der vorhergehenden Ansprüche, wobei sich die genannte Steuereinheit (39) mit verschiedenen Typen von Testtelefonen durch Austauschen des genannten Schnittstellenmoduls (60) verbinden kann.

9. Das Gerät nach einem der vorhergehenden Ansprüche, wobei das genannte Schnittstellenmodul (60) separat von der genannten Steuereinheit (39) ist.

10. Das Gerät nach einem der vorhergehenden Ansprüche weiter umfassend einen Telefonhalter (6) zur Aufnahme des genannten Telefons, wobei der genannte Telefonhalter (6) und die genannte Schnittstelleneinheit (60) Teil einer Telefonadaptereinheit (6, 42, 60) sind, die ohne Austauschen der genannten Steuereinheit (39) austauschbar ist.

11. Das Gerät nach Anspruch 10, wobei die genannte Telefonadaptereinheit (6, 42, 60) weiter eine leitende Platte umfasst, die eine RF-Abschirmung (42) zwischen der genannten Steuereinheit (39) und dem genannten Telefon (8) bildet.

## Revendications

1. Dispositif destiné à estimer la qualité d'un téléphone mobile et/ou d'un réseau téléphonique mobile, comprenant une unité de commande (39), qui commande et surveille le fonctionnement d'un téléphone d'essai, et un module d'interface (60), ledit module d'interface (60) comprenant :
une mémoire de paramètres (68), destinée à stocker au moins un paramètre indicatif des propriétés d'un type donné de téléphone d'essai ; et
un circuit d'interface (62, 64, 66), destiné à connecter ladite unité de commande (39) audit type donné de téléphone d'essai ;
dans lequel ladite unité de commande (39) est conçue pour consulter lesdits paramètres spécifiques du téléphone dans ladite mémoire de paramètres (68) et pour se connecter électriquement audit téléphone d'essai via ledit circuit d'interface (62, 64, 66) ;
**caractérisé en ce que** ledit module d'interface (60) peut être remplacé sans remplacer ladite unité de commande (39), ce qui permet d'adapter rapidement le dispositif à un nouveau type de téléphone.

2. Dispositif selon la revendication 1, dans lequel ladite mémoire de paramètres (68) et ledit circuit d'interface (62, 64, 66) sont disposés sur une carte de circuits commune.

3. Dispositif selon l'une quelconque des revendications précédentes, dans lequel ladite mémoire de paramètres (68) comprend des informations indicatives d'un protocole à utiliser par ladite unité de commande (39) pour communiquer avec ledit téléphone.

4. Dispositif selon l'une quelconque des revendications précédentes, comprenant en outre une caméra (12) destinée à enregistrer une image d'un écran d'affichage (10) dudit téléphone, dans lequel ladite mémoire de paramètres (68) comprend des informations indicatives d'une région de ladite image à traiter pour estimer ladite qualité.

5. Dispositif selon l'une quelconque des revendications précédentes, dans lequel ledit circuit d'interface (62, 64, 66) comprend une interface de signal audio (66) destinée à connecter une sortie audio dudit téléphone à une entrée audio de ladite unité de commande (39).

6. Dispositif selon l'une quelconque des revendications précédentes, dans lequel ledit circuit d'interface (62, 64, 66) comprend une interface d'alimentation (62) destinée à fournir une tension d'alimentation audit téléphone (8).

7. Dispositif selon l'une quelconque des revendications précédentes, dans lequel ledit circuit d'interface (62, 64, 66) comprend une interface de signal numérique (64) destinée à connecter une interface numérique dudit téléphone à ladite unité de commande (39).

8. Dispositif selon l'une quelconque des revendications précédentes, dans lequel ladite unité de commande (39) peut se connecter à différents types de téléphones d'essai en remplaçant ledit module d'interface (60).

9. Dispositif selon l'une quelconque des revendications précédentes, dans lequel ledit module d'interface (60) est séparé de ladite unité de commande (39).

10. Dispositif selon l'une quelconque des revendications précédentes, comprenant en outre un support de téléphone (6) destiné à recevoir ledit téléphone, dans lequel ledit support de téléphone (6) et ledit module d'interface (60) font partie d'une unité adaptatrice de téléphone (6, 42, 60) qui peut être remplacée sans remplacer ladite unité de commande (39).

11. Dispositif selon la revendication 10, dans lequel ladite unité adaptatrice de téléphone (6, 42, 60) comprend en outre une plaque conductrice formant un blindage RF (42) entre ladite unité de commande (39) et ledit téléphone (8).
